# EUROPÄISCHE PATENTSCHRIFT

(11) **EP 1 258 506 B1**
(45) Veröffentlichungstag und Bekanntmachung des Hinweises auf die Patenterteilung: **28.05.2008**
(21) Anmeldenummer: 02016828.2
(22) Anmeldetag: 04.12.2000
(51) Int. Cl.: C08K 3/00, C08K 5/00, B29C 65/16

(54) **Verfahren zur Verbesserung der Oberflächenqualität von Formteilen**
Process for improving the surface quality of mouldings
Procédé pour améliorer les propriétés des surfaces de pièces moulées

(30) Priorität: 14.12.1999 DE 19960104
(43) Veröffentlichungstag der Anmeldung: 20.11.2002
(62) Teilanmeldung aus: 00983211.4
(73) Patentinhaber: LANXESS Deutschland GmbH, 51369 Leverkusen (DE)
(72) Erfinder: Joachimi, Detlev, Dr., 47800 Krefeld (DE); Elschner, Andreas, Dr., 45479 Mühlheim a. d. R. (DE); Botzen, Manfred, 47829 Krefeld (DE); Krause, Frank, 51469 Bergisch Gladbach (DE); Magerstedt, Herbert, 47445 Moers (DE)

(56) Entgegenhaltungen:
- WO-A-95/26869
- HAENSCH D ET AL: "HARTE UND WEICHE KUNSTSTOFFE MIT DIODENLASER VERBINDEN. JOINING HARD AND SOFT PLASTICS WITH A DIODE LASER" KUNSTSTOFFE,DE,CARL HANSER VERLAG. MUNCHEN, Bd. 88, Nr. 2, 1. Februar 1998 (1998-02-01), Seiten 210-212, XP000732887 ISSN: 0023-5563
- BECKER F ET AL: "TRENDS BEI SERIEN-SCHWEISSVERFAHREN" KUNSTSTOFFE,DE,CARL HANSER VERLAG. MUNCHEN, Bd. 87, Nr. 11, 1. November 1997 (1997-11-01), Seiten 1632-1634,1636,, XP000721896 ISSN: 0023-5563
- POTENTE H ET AL: "LASER-DURCHSTRAHLScHWEISSEN VON PE-HD" KUNSTSTOFFE,DE,CARL HANSER VERLAG. MUNCHEN, Bd. 87, Nr. 3, 1. März 1997 (1997-03-01), Seiten 348-350, XP000703688 ISSN: 0023-5563

## Beschreibung

Die vorliegende Erfindung ein Verfahren zur Verbesserung der Oberflächenqualität von Formteilen aus thermoplastischen Formmassen mit einem schwarzen Farbeindruck deren Lasertransparenz im Bereich von nicht eingefärbtem Material liegt.

Für die Verschweißung von Kunststoffformteilen existieren verschiedene Verfahren (Kunststoffe 87, (1997), 11, 1632-1640). Voraussetzung für eine stabile Schweißnaht ist im Falle der weit verbreiteten Verfahren des Heizelementschweißens und des Vibrationsschweißens (z.B. von Kfz-Saugrohren) ein ausreichendes Erweichen der Verbindungspartner in der Kontaktzone vor dem eigentlichen Fügeschritt.

Beim Zusammenpressen der Schweißpartner ist es für die Festigkeit der zu bildenden Schweißnaht entscheidend, dass der hierfür aufgewendete Druck in einem bestimmten, optimalen Bereich liegt. Er sollte nicht zu groß sein, da sonst zuviel Schmelze aus der Kontaktzone herausgepresst wird, darf aber auch nicht zu klein sein, da es sonst ebenfalls zu Schwachstellen in der Schweißnaht kommt. Dies hat u.a. seine Ursache darin, dass bei vielen technischen Teilen, die miteinander verschweißt werden sollen, eine 100 % ige Passgenauigkeit nicht erreicht werden kann. Durch genügend hohen Anpressdruck kann nun zwar Kontakt der Formteilhälften über die gesamte Schweißnaht erzielt werden, die lokal unterschiedlichen Druckverhältnisse führen jedoch zu unterschiedlich starkem Ausfließen von Schmelze aus der Schweißnaht und damit zu lokal unterschiedlich hohen Festigkeiten. Eine Verringerung des Problems ist zum Beispiel durch Erhöhung der Schmelzeviskosität möglich (EP-A 0 685 528 A1), was ein geringeres Ausfließen der Schmelze aus der Fügezone bedingt.

Als alternative Methode zum Vibrationsschweißen und Heizelementschweißen findet das Laserdurchstrahlschweißen, insbesondere mit Diodenlaser in letzter Zeit immer stärkere Verbreitung. Grundlage des Laserstrahlschweißens von Kunststoffen ist die Strahlungsabsorption in der Formmasse. Reine Polymere sind für Laserstrahlung weitgehend transparent bzw. transluzent, d.h. sie absorbieren nur schlecht. Durch Pigmente, Füll- bzw. Verstärkungsstoffe und Additive kann die Absorption und damit die Umwandlung von Laserlicht in Wärme gesteuert werden.

Grundlegende Prinzipien des Laserdurchstrahlschweißens sind in der Fachliteratur beschrieben (Kunststoffe 87 (1997) 3, 348-350; Kunststoffe 88 (1998) 2, 210-212; Kunststoffe 87 (1997) 11, 1632-1640; Plastverarbeiter 50 (1999) 4, 18-19; Plastverarbeiter 46 (1995) 9, 42-46).

Voraussetzung für die Anwendung des Laserstrahlschweißens ist, dass die vom Laser emittierte Strahlung zunächst einen Fügepartner, der für Laserlicht der eingesetzten Wellenlänge ausreichend transparent ist, durchdringt, und dann vom zweiten Fügepartner in einer dünnen Schicht von einigen 100 µm absorbiert und in Wärme umgewandelt wird, die zum Aufschmelzen in der Kontaktzone und letztlich zur Verbindung beider Fügepartner durch eine Schweißnaht führt.

Im Bereich der Wellenlänge der für das Thermoplastschweißen üblicherweise eingesetzten Laser (Nd:YAG-Laser:1060 nm; Hochleistungsdiodenlaser: 800 bis 1000 nm) sind teilkristalline Thermoplaste wie Polyamide, z.B. Polyamid 6 (PA6) und Polyamid 66 (PA66), oder Polyester, z.B. Polybutylentherephthalat (PBT) und Polyethylentherephthalat (PET), weitgehend transparent bzw. lasertransluzent.

Wenn im folgenden die Begriffe lasertransparent und laserabsorbierend verwendet werden, beziehen sie sich immer auf den oben genannten Wellenlängenbereich. Es kommt jedoch durch die teilkristalline Morphologie zu mehr oder weniger starker Streuung des Laserlichtes, so dass ein großer Teil der Transmission auf den diffusen Anteil entfällt. Die Messung des Transmissionsvermögens für IR-Laserlicht erfolgt üblicherweise mit einem Spektralphotometer und einer integrierenden Photometerkugel. Diese Messanordnung detektiert auch den diffusen Anteil der transmittierten Strahlung. Es wird nicht nur bei einer Wellenlänge, sondern in einem Spektralbereich gemessen, der alle z.Zt. für den Schweißvorgang eingesetzten Laserwellenlängen umfasst.

Beeinträchtigt wird die Transmission von Laserlicht durch Bestandteile der thermoplastischen Formmassen, die Licht der entsprechenden Wellenlänge absorbieren. Dies sind insbesondere Ruße, aber auch andere Farbstoffe, Pigmente oder Füll- und Verstärkungsstoffe, z.B. Kohlenstofffasern. Für die erfolgreiche technische Anwendung des Laserdurchstrahlschweißens für die Verbindung von Formteilen aus thermoplastischen Formmassen ist also eine laserstrahlabsorbierende Formmasse und eine weitgehend laserstrahltransparente Formmasse erforderlich.

Für die laserabsorbierende Formmasse können z.B. im Falle von glasfaserverstärkten PA6-Compounds rußhaltige Formmassen eingesetzt werden. Derartige Formmassen werden z.B. üblicherweise auch für Saugrohre von Kraftfahrzeugverbrennungsmotoren, die im Vibrationsschweißverfahren gefügt werden, eingesetzt.

Falls die Absorption der Strahlung sehr oberflächennah erfolgt, was u.U. zu geringerer Schweißnahtfestigkeit führt, kann ggf. durch Reduzierung der Rußkonzentration eine Verbesserung erzielt werden (Kunststoffe 87 (1997) 3, 348-350).

In EP-A 0 751 865 wird ein Verfahren des Laserdurchstrahlschweißens beschrieben, bei dem ein erstes Werkstückteil mit einer Transmission von größer 60 % mit einem zweiten Werkstückteil vernachlässigbarer Transmission verschweißt wird. Die geringe Transmission des Gehäusesockels wird dabei durch eine Pigmentierung mit 1% bis 2% Farbstoffe und für den Gehäusedeckel mit einer geringeren Farbmittelkonzentration, gegebenenfalls auch ohne Pigmentierung erzielt. Welche Pigmente bzw. Farbmittel geeignet sind, ist nicht beschrieben.

Prinzipiell ist also die Kombination von z.B. nicht eingefärbtem glasfaserverstärktem PA6 als lasertransparentem Partner mit einem mittels Ruß eingefärbten glasfaserverstärkten PA6 als laserabsorbierendem Partner eine Möglichkeit, um zu einer festen Verbindung von zwei Formteilen aus in diesem Falle glasfaserverstärkten PA6 zu gelangen.

Die Verbindung eines schwarzen (z.B. mittels Ruß eingefärbten laserabsorbierenden) mit einem farblosen bzw. weißen (nicht eingefärbten, lasertransparenten) Formteil ist jedoch für viele Anwendungen problematisch. Insbesondere bei Anwendungen mit hoher Temperaturbelastung (T >100°C), wie sie z.B. für Polyamidformteile im Automobilbereich typisch ist, kommt es bei nicht eingefärbten Formteilen sehr schnell zu einer unansehnlichen Vergilbung bis Verbräunung der Oberfläche, die aus ästhetischen Gründen unerwünscht ist.

Das am häufigsten zur Schwarzeinfärbung von technischen Thermoplasten verwendete Farbmittel ist Ruß, wobei Ruße zum Einsatz kommen, die über verschiedene Verfahren hergestellt werden und unterschiedliche Korngrößenverteilungen bzw. spezifische Oberflächen besitzen. Die Verwendung von Rußen ist für die Schwarzeinfärbung deutlich kostengünstiger als organische oder anorganische Farbmittel.

In vielen Fällen wirkt sich die Einfärbung mit Rußen oder anorganischen Pigmenten jedoch negativ auf mechanische Eigenschaften von technischen Thermoplasten, insbesondere auf die Zähigkeit, gemessen z.B. als Izod-Schlagzähigkeit nach ISO 180 1C, aus.

In manchen technischen Thermoplasten, z.B. in Polyamid 6 und Polyamid 66 wirken Ruße außerdem als Nukleierungsmittel, d.h. der Ruß wirkt als Kristallisationskeim in der Polyamidschmelze und fördert somit die Kristallisation. Beschleunigte Kristallisation führt jedoch häufig zu einer Verschlechterung der Oberflächenqualität, insbesondere bei im Spritzgießverfahren hergestellten Formteilen. Deshalb wird in thermoplastischen Formmassen häufig eine möglichst geringe Konzentration an Ruß eingesetzt. Glasfaserverstärkte Polyamid-6-Formmassen weisen aber auch bei sehr geringen Anteilen an Ruß (<0,2 %) noch eine so geringe Transmission für Laserlicht auf, dass keine Verschweißung von Formteilen entsprechend dem in EP-A 0 751 865 beschriebenen Verfahren möglich ist. Noch weitergehende Reduzierung der Rußkonzentration führt zwar zu einer Erhöhung der Transmission, geht jedoch stark zu Lasten eines gleichmäßigen Farbeindruckes für das gesamte Werkstück.

Wünschenswert ist eine möglichst einheitliche Farbgebung der zu verschweißenden Fügepartner bei möglichst guter Oberflächenqualität. Gute Oberflächenqualität bedeutet hier vor allem möglichst glatte Oberfläche mit hohem Glanz.

Es besteht daher die Aufgabe, ein Verfahren zur Verbesserung der Oberflächenqualität von Formteilen aus thermoplastischen Formmassen mit einem schwarzen Farbeindruck bereit zustellen, deren Lasertransparenz im Bereich von nicht eingefärbtem Material liegt. Derartige im Verfahren eingesetzte Formmassen lassen sich im Laserdurchstrahlverfahren gut mit laserabsorbierenden Formteilen verbinden, wobei beide Formteile für das menschliche Auge eine sehr ähnliche optische Erscheinung hinsichtlich Farbe und Oberflächenqualität aufweisen.

Es wurde nun überraschenderweise gefunden, dass sich die Oberflächenqualität von Formteilen aus thermoplastischen Formmassen mit einem schwarzen Farbeindruck bereit zustellen, deren Lasertransparenz im Bereich von nicht eingefärbtem Material liegt, durch ein Verfahren gemäß Anspruch 1 verbessern läßt.

Die Kombination der Farbmittel ist für den schwarz eingefärbten Formkörper der vom Laser durchstrahlt wird so zu wählen, dass die Transmission im VIS Spektralbereich (Wellenlängenbereich des Lichtes von 400 nm bis 700 nm), zumindest in spektralen Teilbereichen <10 % ist und im NIR-Bereich (Wellenlängenbereich des Lichtes von 700 nm bis 1200 nm) >10 %. Vorzugsweise sollte die Transmission im NIR >20 % und die Transmission im VIS <5 % betragen, besonders bevorzugt <1 % (VIS) und > 30 % (NIR).

Die Farbmittel sind so zu kombinieren, dass bei Verwendung in einer nichtstreuenden Matrix die Extinktion bei 1 mm Schichtdicke im VIS-Bereich E ≥2 und im NIR-Bereich E ≤2 beträgt. Bevorzugt beträgt die Extinktion bei 1 mm Schichtdicke im VIS-Bereich E >2,5 bei E <1 im NIR-Bereich und besonders bevorzugt E >3 im VIS-Bereich bei E <0,1 im NIR-Bereich.

Die im Verfahren einzusetzenden thermoplastische Formmassen sind mit Kombination von mindestens zwei Farbmitteln so eingefärbt, dass ein dunkler Farbeindruck (Normfarbwert Y <30, bevorzugt Y<20, besonders bevorzugt Y<10) der Formmasse resultiert und dass im Bereich des sichtbaren Lichtes (400 nm bis 700 nm) bei mindestens einer Schichtdicke, die im Bereich von 0,4 bis 5 mm liegen kann, geringe oder keine Transmission (≤10%) und im Wellenlängenbereich von 700 nm bis 1200 nm zumindest in spektralen Teilbereichen Transmission von >10% bei Bestrahlen mit LASER-Licht auftritt.

Bevorzugt werden Formmassen eingesetzt, die im Bereich des sichtbaren Lichtes (400 nm bis 700 nm) bei mindestens einer Schichtdicke, die im Bereich von 0,4 bis 5 mm liegen kann, geringe oder keine Transmission (≤5%) und im Wellenlängenbereich von 700 nm bis 1200 nm zumindest in spektralen Teilbereichen Transmission von >20 % aufweist und die Formmasse einen dunklen Farbeindruch (Normfarbwert Y <30, bevorzugt Y<20, besonders bevorzugt Y<10) liefert.

Besonders bevorzugt werden Formmassen eingesetzt, die im Bereich des sichtbaren Lichtes (400 nm bis 700 nm) bei mindestens einer Schichtdicke, die im Bereich von 0,4 bis 5 mm liegen kann, geringe oder keine Transmission (≤1%) und im Wellenlängenbereich von 700 nm bis 1200 nm zumindest in spektralen Teilbereichen Transmission von >30% aufweist und einen dunklen Farbeindruck (Normfarbwert Y <30, bevorzugt Y<20, besonders bevorzugt Y<10) liefert.

Die eingesetzten lasertransparenten Kunststoffe enthalten Polyamide oder thermoplastische Polyester.

Die Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern), zu Werkstoffen mit speziell eingestellten Eigenschaftskombinationen ausgerüstet werden. Geeignet sind auch Blends mit Anteilen von anderen Polymeren z.B. von Polyethylen, Polypropylen, ABS. Die Eigenschaften der Polyamide lassen sich durch Zusatz von Elastomeren verbessern, z. B. im Hinblick auf die Schlagzähigkeit von z. B. verstärkten Polyamiden. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen ausnahmslos über die Polykondensation in der Schmelze. In diesem Rahmen wird auch die hydrolytische Polymerisation von Lactamen als Polykondensation verstanden.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Ausgangsprodukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen.

Besonders bevorzugt werden Caprolactame, ganz besonders bevorzugt s-Caprolactam eingesetzt.

Besonders geeignet sind weiterhin die meisten auf PA6, PA66 und anderen aliphatischen oder/und aromatischen Polyamiden bzw. Copolyamiden basierenden Compounds, bei denen auf eine Polyamidgruppe in der Polymerkette 3 bis 11 Methylengruppen kommen.

Die erfindungsgemäß hergestellten Polyamide können auch im Gemisch mit anderen Polyamiden und/oder weiteren Polymeren eingesetzt werden.

Zusätzlich können die Polyamidformmassen noch Brandschutzmittel wie z. B. Phosphorverbindungen, organische Halogenverbindungen, Stickstoffverbindungen und/oder Magnesiumhydroxid, Stabilisatoren, Verarbeitungshilfsmittel wie z. B. Gleitmittel, Nukleierungsmittel, Stabilisatoren, Schlagzähmodifikatoren wie z. B. Kautschuke oder Polyolefine u.ä enthalten, vorausgesetzt, dass diese keine zu starke Absorption im Bereich der Wellenlänge des verwendeten Lasers aufweisen.

Als faserförmige Verstärkungsstoffe neben Glasfasern kommen Aramidfasern, Mineralfasern und Whisker in Betracht. Als geeignete mineralische Füllstoffe seien beispielhaft Kalziumcarbonat, Dolomit, Kalziumsulfat, Glimmer, Fluorglimmer, Wollastonit, Talkum und Kaolin genannt. Zur Verbesserung der mechanischen Eigenschaften können die faserförmigen Verstärkungsstoffe und die mineralischen Füllstoffe oberflächenbehandelt sein.

Die Zugabe der Füllstoffe kann vor, während oder nach der Polymerisation der Monomere zum Polyamid erfolgen. Erfolgt die Zugabe der erfindungsgemäßen Füllstoffe nach der Polymerisation, so erfolgt sie vorzugsweise durch Zugabe zur Polyamidschmelze in einem Extruder. Erfolgt die Zugabe der erfindungsgemäßen Füllstoffe vor oder während der Polymerisation, so kann die Polymerisation Phasen umfassen, in denen in Gegenwart von 1 bis 50 Gewichtsprozent Wasser gearbeitet wird.

Die Füllstoffe können bei der Zugabe schon als Partikel mit der letztendlich in der Formmasse auftretenden Partikelgröße vorliegen. Alternativ können die Füllstoffe in Form von Vorstufen zugegeben werden, aus denen die letztendlich in der Formmasse auftretenden Partikel erst im Laufe der Zugabe bzw. Einarbeitung entstehen.

Als Brand- oder Flammschutzmittel kommen beispielsweise roter Phosphor (DE-A-3 713 746 A 1 (= US-A-4 877 823) und EP-A-299 444 (= US-A-5 081 222), bromierte Diphenyle oder Diphenylether in Kombination mit Antimontrioxid und chlorierte cycloaliphatische Kohlenwasserstoffe (Dechlorane® plus von Occidental Chemical Co.), bromierte Styrol-Oligomere (z.B. in DE-A-2 703 419) und kernbromierte Polystyrole (z.B. Pyro-Chek 68® von FERRO Chemicals) in Frage.

Als Synergist zu den genannten Halogenverbindungen werden z.B. Zinkverbindungen oder Eisenoxide eingesetzt.

Als weitere Alternative haben sich vor allem Melaminsalze als Flammschutzmittel besonders für unverstärkte Polyamide bewährt.

Darüberhinaus hat sich Magnesiumhydroxid als Flammschutzmittel für Polyamid seit langem bewährt.

Die Polyamid-Formmassen können neben Glasfasern zusätzlich kautschukelastische Polymerisate enthalten (oft auch als Schlagzähmodifikator, Elastomer oder Kautschuk bezeichnet).

Die teilaromatischen Polyester sind ausgewählt aus der Gruppe der Derivate der Polyalkylidenterephthalate, bevorzugt ausgewählt aus der Gruppe der Polyethylentherphthalate, der Polytrimethylenterephthalate und der Polybutylenterephthalate, besonders bevorzugt der Polybutylenterephthalate, ganz besonders bevorzugt des Polybutylenterephthalats.

Unter teilaromatischem Polyester versteht man Materialien, die neben aromatischen Molekülteilen auch aliphatische Molekülteile enthalten.

Polyalkylenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Propandiol-1,3- bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan, 2,2-bis-(3-β-hydroxyethoxyphenyl)-propan und 2,2-bis-(4-hydroxypropoxyphenyl)-propan (DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Bevorzugt ist die Verwendung von nicht mehr als 1 Mol.-% des Verzweigungsmittels, bezogen auf die Säurekomponente.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,4 bis 1,5, vorzugsweise 0,5 bis 1,3, jeweils gemessen in Phenol/o-Dichlorbenzol (1:1 Gew.-Teile) bei 25°C.

Weiterhin können die teilaromatischen Polyester Zusatzstoffe wie z.B. Füll- und Verstärkungsstoffe wie z.B. Glasfasern oder mineralische Füllstoffe, Flammschutzmittel, Verarbeitungshilfsmittel, Stabilisatoren, Fließhilfsmittel, Antistatika, und andere übliche Additive enthalten.

Als faser- oder teilchenförmige Füllstoffe und Verstärkungsstoffe für die erfindungsgemäßen Formmassen können Glasfasern, Glaskugeln, Glasgewebe, Glasmatten, Aramidfasern, Kaliumtitanat-Fasern, Naturfasern, amorphe Kieselsäure, Magnesiumcarbonat, Bariumsulfat, Feldspat, Glimmer, Silikate, Quarz, Talkum, Kaolin, Wollastonit, u.a. zugesetzt werden, die auch oberflächenbehandelt sein können. Bevorzugte Verstärkungsstoffe sind handelsübliche Glasfasern. Die Glasfasern, die im allgemeinen einen Faserdurchmesser zwischen 8 und 18 µm haben, können als Endlosfasern oder als geschnittene oder gemahlene Glasfasern zugesetzt werden, wobei die Fasern mit einem geeigneten Schlichtesystem und einem Haftvermittler bzw. Haftvermittlersystem z.B. auf Silanbasis ausgerüstet sein können.

Geeignet sind auch nadelförmige mineralische Füllstoffe.Unter nadelförmigen mineralischen Füllstoffen wird im Sinne der Erfindung ein mineralischer Füllstoff mit stark ausgeprägter nadelförmiger Struktur verstanden. Als Beispiel sei nadelförmiger Wollastonit genannt. Vorzugsweise weist das Mineral ein L/D-(Länge Durchmesser)-Verhältnis von 8:1 bis 35:1, bevorzugt von 8:1 bis 11:1 auf. Der mineralische Füllstoff kann gegebenenfalls oberflächenbehandelt sein.

Vorzugsweise enthält die Polyester-Formmasse 0 bis 50 Gew.-Teile, bevorzugt 0 bis 40, insbesondere 10 bis 30 Gew.-Teile Füll- und/oder Verstärkungsstoffe zugesetzt. Es lassen sich ebenfalls Polyesterformmassen ohne Füll- und/oder Verstärkungsstoffe verwenden.

Als Flammschutzmittel sind handelsübliche organische Verbindungen oder Halogenverbindungen mit Synergisten oder handelsübliche organische Stickstoffverbindungen oder organisch/anorganische Phosphorverbindungen geeignet. Auch mineralische Flammschutzadditive wie Magnesiumhydroxid oder Ca-Mg-Carbonat-Hydrate (z.B. DE-A 4 236 122) können eingesetzt werden. Als halogenhaltige, insbesondere bromierte und chlorierte Verbindungen seien beispielhaft genannt: Ethylen-1,2-bisteträbromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen gemäß WO 98/17720 geeignet, z.B. Triphenylphosphat (TPP) Resorcinol-bis-(diphenylphosphat) einschließlich Oligomere (RDP) sowie Bisphenol-Abis-diphenylphosphat einschließlich Oligomere (BDP), Melaminphosphat, Melaminpyrophosphat, Melaminpolyphosphat und deren Mischungen. Als Stickstoffverbindungen kommen insbesondere Melamin und Melamincyanurat in Frage. Als Synergisten sind z.B. Antimonverbindungen, insbesondere Antimontrioxid und Antimonpentoxid, Zinkverbindungen, Zinnverbindungen wie z.B. Zinnstannat und Borate geeignet. Kohlenstoffbildner und/oder Tetrafluorethylenpolymerisate können zugesetzt werden.

Die teilaromatischen Polyester können übliche Additive, wie Mittel gegen Wärmezersetzung, Mittel gegen Wärmevernetzung, Mittel gegen Beschädigung durch ultraviolettes Licht, Weichmacher, Gleit- und Entformungsmittel, Nukleierungsmittel, Antistatika, ggf. weitere Stabilisatoren enthalten.

Die teilaromatischen Polyesterformmassen werden hergestellt, indem man die jeweiligen Bestandteile in bekannter Weise vermischt und bei Temperaturen von 200°C bis 330°C in üblichen Aggregaten wie z.B. Innenknetern, Extrudern, Doppelwellenschnecken schmelzcompoundiert oder schmelzextrudiert. Bei dem Schmelzcompoundier- oder Schmelzextrudierschritt lassen sich weitere Zusätze wie z.B. Verstärkungsstoffe, Stabilistoren, Gleit- und Entformungsmittel, Nukleierungsmittel, und andere Additive zusetzen.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel sowie andere Farbmittel zugesetzt werden, falls diese nicht im Bereich des verwendeten Lasers absorbieren. Andernfalls dürfen sie nur in so geringen Mengen eingesetzt werden, dass zumindest noch eine teilweise Transmission des Laserlichtes möglich ist.

Als Keimbildungsmittel können z.B. Natriumphenylphosphinat, Aluminiumoxid, Siliziumdioxid sowie bevorzugt Talkum eingesetzt werden.

Gleit- und Entformungsmittel, welche üblicherweise in Mengen bis zu 1 Gew.-% eingesetzt werden, sind bevorzugt Esterwachse, Penterithrytstearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse sowie niedermolekulare Polyethylen- bzw. Polypropylenwachse.

Als Beispiele für Weichmacher seien Phthalsäüredioctylester, Phthalsäuredibenzylester, Phthalsäurebutylbenzylester, Kohlenwasserstofföle, N-(n-Butyl)benzolsulfonamid genannt.

Besonders bevorzugt ist der zusätzliche Einsatz von kautschukelastischen Polymerisaten (oft auch als Schlagzähmodifikator, Elastomer oder Kautschuk bezeichnet).

Ganz allgemein handelt es sich dabei um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag), Stuttgart, 1961), Seiten 392 bis 406 und in der Monographie von C.B. Bucknall, "Toughened Plastics" (Applied Science Publishers, London, 1977) beschrieben.

Weiterhin können auch Mischungen von Kautschuktypen eingesetzt werden.

Die Farbmittel Kombination werden ausgewählt aus den Farbstoffen vom Pyrazolon-, Perinon- und Anthrachinontyp, weiterhin vom Methin-, Azo- und Cumarin-Typ und/oder metallhaltigen Pigmenten, wie anorganischen Pigmenten und die Metallkomplexen von Azo-, Azomethin- oder Methinfarbstoffen, Azomethin-, Chinacridon-, Dioxazin-, Isoindolin-, Isoindolinon-, Perylen-, Phthalocyanin-, Pyrrolopyrrol- und Thioindigo-Farbmitteln und Wismut-Vanadat.

Beispiele für anorganische Pigmente sind Antimontrioxid, Antimonpentoxid, basisches Bleicarbonat, basisches Bleisulfat oder Bleisilikat, Lithopone, Titandioxid (Anatas, Rutil), Zinkoxid, Zinksulfid, Metalloxide wie Berlinerblau, Bleichromat, Bleisulfochromate, Chrom-antimon-titanat, Chromoxide, Eisenoxide, Kobaltblau, Kobaltchromblau, Kobaltnickelgrau, Manganblau, Manganviolett, Molybdatorange, Molybdatrot, Nickel-antimon-titanat, Ultramarinblau, sowie Metallsulfide wie Antimontrisulfid, Cadmiumsulfid, Cadmiumsulfoselenide, Zirkonsilikate, Zirkonvanadiumblau, Zirkonpraseodymgelb.

Als polymerlösliche Farbstoffe eignen sich beispielsweise Dispersionsfarbstoffe, wie solche der Anthrachinonreihe, beispielsweise Alkylamino-, Amino-, Arylamino-, Cyclohexylamino-, Hydroxy-, Hydroxyamino- oder Phenylmercaptoanthrachinone, sowie Metallkomplexe von Azofarbstoffen, insbesondere 1:2-Chrom- oder Kobaltkomplexe von Monoazofarbstoffen, sowie Fluoreszenzfarbstoffe, zum Beispiel solche aus der Benzthiazol-, Cumarin-, Oxarin- oder Thiazinreihe.

Die polymerlöslichen Farbstoffe können auch in Kombinationen mit Füllern und/ oder Pigmenten, insbesondere mit anorganischen Pigmenten wie Titandioxid eingesetzt werden.

Die verwendeten Farbstoffe oder Pigmente dürfen im NIR-Spektralbereich keine oder nur eine sehr geringe Absorption aufweisen und sollten mit den Polyamiden oder thermoplastischen Polyestern verträglich sein.

Geeignete Pigmentzusätze sind beispielsweise Fettsäuren mit mindestens 12 C-Atomen, wie Behensäure oder Stearinsäure, deren Amide, Salze oder Ester, wie Aluminiumstearat, Magnesiumstearat, Zinkstearat, oder Magnesiumbehenat, sowie quartäre Ammoniumverbindungen, wie Tri-(C₁-C₄)-alkylbenzylammoniumsalze, Wachse, wie Polyethylenwachs, Harzsäuren, wie Abietinsäure, Kolophoniumseife, hydriertes oder dimeriesiertes Kolophonium, C₁₂-C₁₈-Paraffindisulfonsäuren oder Alkylphenole.

### Beispiele

Unverstärktes PA 6 (Durethan B30S, Handelsprodukt der Bayer AG, Leverkusen, Deutschland, rel. Viskosität = 3,0) bzw. glasfaserverstärktes PA 6 (Durethan BKV30, Handelsprodukt der Bayer AG, Leverkusen, Deutschland, rel. Viskosität = 3,0) und glasfaserverstärktes PA 66 (Durethan AKV 30, Handelsprodukt der Bayer AG, Leverkusen, Deutschland, rel. Viskosität = 3,0) wurden mit Ruß (Vergleichsversuche, Verwendung von Masterbatchen) bzw. Mischungen organischer Farbmittel physikalisch vermischt und durch Compoundierung auf einem Zweiwellenextruder (ZSK 32 der Fa. Werner und Pfleiderer) bei Massetemperaturen von 260 bis 300°C homogen eingefärbt. Die Schmelze wurde anschließend durch ein Wasserbad abgesponnen und granuliert. Alle Viskositätsmessungen wurden in m-Kresol (1%ige Lösung, T = 25°C) durchgeführt.

Das erhaltene Granulat wurde auf einer Spritzgießmaschine des Typs Arburg 320-210-500 unter formmasseüblichen Bedingungen (Massetemperaturen von 250 bis 290°C, Werkzeugtemperaturen von 70 bis 90°C) für Lasertransmissionsmessungen und Schweißversuche zu 2 mm bzw. 4 mm dicken Farbmusterplatten (60 mm x 40 mm) verarbeitet.

Beispiele für Zusammensetzung und Eigenschaften von erfindungsgemäßen Formmassen bzw. von Vergleichsmaterial sind in Tabellen 1 bis 4 angegeben.

**Tab. 1.Zussammensetzund der Formmassen**

| | | **Bsp. 1** | **Bsp. 2** | **Vgl. 1** | **Vgl. 2** | **Vgl.3** | **Vgl. 4** | **Bsp. 3** | **Bsp. 4** | **Vgl. 5** | **Vgl. 6** |
|---|---|---|---|---|---|---|---|---|---|---|---|
| PA6¹⁾ | Gew. [%] | 97,77 | 99,62 | 99,8 | 99,9 | 69,8 | 69,9 | 69,77 | 69,62 | 100 | 70 |
| Ruß ²⁾ | Gew. [%] | - | - | 0,2 | 0,1 | 0,2 | 0,1 | | | | |
| Glasfaser ³⁾ | Gew. [%] | | | | | 30 | 30 | 30 | 30 | | 30 |
| Macrolex Gelb 3G⁴⁾ | Gew. [%] | 0,04 | 0,06 | | - | | | 0,04 | 0,06 | | |
| Macrolex Rot EG⁵⁾ | Gew. [%] | 0,12 | 0,20 | | - | | | 0,12 | 0,20 | | |
| Macrolex Grün 5B⁶⁾ | Gew. [%] | 0,07 | 0,12 | | - | | | 0,07 | 0,12 | | |

| | | | | | | | | | | | |
|---|---|---|---|---|---|---|---|---|---|---|---|
| ¹⁾ PA6 der Viskosität = 3,0, Handelsprodukt Bayer AG, Leverkusen, Deutschland, dem übliche Additive in üblichen Mengen und konstanten Konzentrationen (0,01 - 0,5 %) als Nukleierungsmittel (Mikrotalkum), Hitzestabilisator (CuI/KBr) und Entformungsmittel (Montanesterwachs) zugemischt sein können, | | | | | | | | | | | |
| ²⁾ absolute Rußmenge in Gew.-%; eingesetzt wurde Masterbatch UN2014 50%ig von Fa. Cabot, | | | | | | | | | | | |
| ³⁾ CS 7928; Handelsprodukt der Bayer AG, Leverkusen, Deutschland | | | | | | | | | | | |
| ⁴⁾ Handelsprodukt der Bayer AG, Pyrazolonfarbstoff, Solvent Yellow 93, Colour Index 48160 | | | | | | | | | | | |
| ⁵⁾ Handelsprodukt der Bayer AG, Perinonfarbstoff, Solvent Red 135 | | | | | | | | | | | |
| ⁶⁾ Handelsprodukt der Bayer AG, Anthrachinonfarbstoff, Solvent Green 3, Colour Index 61565 | | | | | | | | | | | |

### Durchführung und Ergebnisse der Lasertransmissionsmessungen

Die Musterplatten aus dem IR-Laser-absorbierenden und dem IR-Laser-transparenten Material wurden beide mit einer Transmissionsmessanordnung, bestehend aus einem Spektralphotometer und einer Photometerkugel, vermessen, die sowohl direkt transmittiertes Licht als auch gestreutes Licht erfasst. Für die IR-Laser-absorbierenden Proben werden im NIR-Spektralbereich zwischen 800 und 1200 nm Messwerte von <0.1% erhalten, während das IR-Laser-transparente Material ein Transmissionsniveau von typischerweise 20 bis 70% aufweist.

**Tab. 2: Ergebnisse der Transmissionsmessungen***

| | | **Bsp. 1** | **Bsp. 2** | **Vgl. 1** | **Vgl. 2** | **Vgl. 3** | **Vgl. 4** | **Bsp. 3** | **Bsp. 4** | **Vgl. 5** | **Vgl. 6** |
|---|---|---|---|---|---|---|---|---|---|---|---|
| Wellenlänge [nm] | Probendicke [mm] | | | | | | | | | | |
| 400 | 2 | <0,1 | <0,1 | <0,1 | <0,1 | <0,1 | <0,1 | <0,1 | <0,1 | | |
| 500 | 2 | <0,1 | <0,1 | <0,1 | <0,1 | <0,1 | <0,1 | <0,1 | <0,1 | | |
| 600 | 2 | <0,1 | <0,1 | <0,1 | <0,1 | <0,1 | <0,1 | <0,1 | <0,1 | | |
| 700 | 2 | 1 | <0,1 | <0,1 | <0,1 | <0,1 | <0,1 | 0,5 | <0,1 | 53 | 53 |
| 800 | 2 | 49 | 48 | <0,1 | <0,1 | <0,1 | <0,1 | 48 | 47 | 56 | 57 |
| 900 | 2 | 55 | 55 | <0,1 | <0,1 | <0,1 | <0,1 | 54 | 54 | 58 | 59 |
| 1000 | 2 | 59 | 60 | <0,1 | <0,1 | <0,1 | <0,1 | 58 | 59 | 61 | 62 |
| 1100 | 2 | 62 | 63 | <0,1 | <0,1 | <0,1 | <0,1 | 61 | 62 | 63 | 65 |
| 1200 | 2 | 45 | 45 | <0,1 | <0,1 | <0,1 | <0,1 | 48 | 49 | 45 | 51 |
| 1300 | 2 | 64 | 64 | <0,1 | <0,1 | <0,1 | <0,1 | 64 | 65 | 64 | 67 |
| 1400 | 2 | 53 | 54 | <0,1 | <0,1 | <0,1 | <0,1 | 56 | 57 | 53 | 59 |
| | | | | | | | | | | | |
| 400 | 4 | <0,1 | <0,1 | <0,1 | <0,1 | <0,1 | <0,1 | <0,1 | <0,1 | | |
| 500 | 4 | <0,1 | <0,1 | <0,1 | <0,1 | <0,1 | <0,1 | <0,1 | <0,1 | | |
| 600 | 4 | <0,1 | <0,1 | <0,1 | <0,1 | <0,1 | <0,1 | <0,1 | <0,1 | | |
| 700 | 4 | <0,1 | <0,1 | <0,1 | <0,1 | <0,1 | <0,1 | <0,1 | <0,1 | 34 | 30 |
| 800 | 4 | 26 | 24 | <0,1 | <0,1 | <0,1 | <0,1 | 22 | 21 | 36 | 32 |
| 900 | 4 | 31 | 30 | <0,1 | <0,1 | <0,1 | <0,1 | 27 | 28 | 36 | 33 |
| 1000 | 4 | 35 | 34 | <0,1 | <0,1 | <0,1 | <0,1 | 30 | 31 | 37 | 35 |
| 1100 | 4 | 37 | 37 | <0,1 | <0,1 | <0,1 | <0,1 | 33 | 34 | 38 | 37 |
| 1200 | 4 | 16 | 16 | <0,1 | <0,1 | <0,1 | <0,1 | 19 | 19 | 16 | 22 |
| 1300 | 4 | 36 | 36 | <0,1 | <0,1 | <0,1 | <0,1 | 36 | 37 | 36 | 40 |
| 1400 | 4 | 24 | 24 | <0,1 | <0,1 | <0,1 | <0,1 | 27 | 28 | 23 | 31 |

| | | | | | | | | | | | |
|---|---|---|---|---|---|---|---|---|---|---|---|
| *Gesamttransmission [%], Messgerät PE Lambda900, 0°/diffus, Ref. Luft T=100%, Messung teilweise mit Abschwächer | | | | | | | | | | | |

Da es sich bei allen Proben um sehr stark streuendes Material handelt,wurde die Gesamttransmission als Summe aus direkter und diffuser Transmission ausgewertet.

Die Proben entsprechend den Vergleichsbeispielen weisen bei 1000 nm und im benachbarten Wellenlängenbereich praktisch keine Transmission sondern eine fast vollständige Absorption auf, während die erfindungsgemäß eingefärbten Proben Bsp.1 bis 4 eine noch hohe Transmission zeigen, wobei dies die Gesamttransmission (bestehend vorwiegend aus diffusen Strahlungsanteilen) ist. Die Messwerte für die Transmission der erfindungsgemäß eingefärbten Proben liegen nur geringfügig unter den Werten, die für nicht eingefärbtes Material Vgl. 5 und 6 gemessen wurden.

Zusätzlich zur Vermessung der PA-Proben wurde die Transmission von 1 und 4 mm dicken Farbmusterplättchen aus Polycarbonat, eingefärbt mit erfindungsgemäßen Farbmittelkombinationen entsprechend Beispiel 1 und 2 bestimmt. Als Referenzmaterial diente nicht eingefärbtes Polycarbonat. Da mit Polycarbonat keine Streuung auftritt, lässt sich hier ein schichtdickenunabhängiger Extinktionskoeffizient bestimmen, der bei den beiden untersuchten erfindungsgemäßen Einfärbungen für den VIS-Spektralbereich (400 nm bis 700 nm) bei E>4 und für den NIR-Spektralbereich (700 nm bis 1200 nm) bei E<0.002 liegt.

### Durchführung und Ergebnisse der Laserschweißversuche

Zur Überprüfung der Eignung der Formmassen für Laserdurchstrahlschweißen wurden Schweißversuche mit einem Nd-Yag Laser durchgeführt. Die laserstrahltransparenten Musterplatten wurden auf eine Breite von 20mm gesägt.

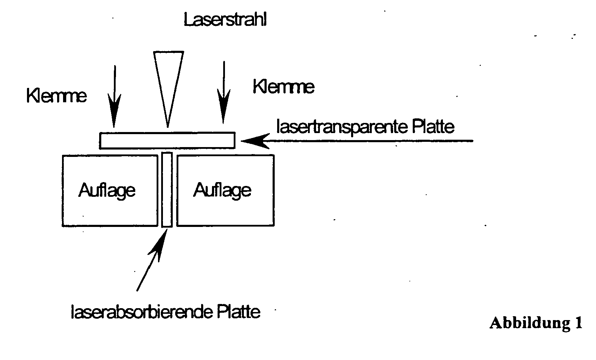

Die Proben wurden in eine Vorrichtung gespannt und im T-Stoß wie in der Abbildung 1 zu sehen miteinander gefügt. Die 2mm Proben wurden mit ca.20 Watt mit 6mm/s und 2 Scans und die 4mm Proben mit ca. 35 Watt und 4 Scans geschweißt.

Ein Scan bedeutet das Abfahren der kompletten Breite der Probe mit aktiviertem Laserstrahl.

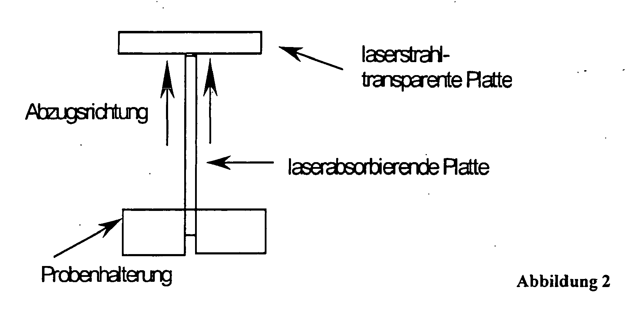

Die als T-Stoß geschweißten Proben wurden wie in Abbildung 2 dargestellt in einem Zugversuch bis zum Bruch belastet.

Die dabei gemessene Kraft wurde über die Schweißfläche zu einer Zugfestigkeit umgerechnet. Die erzielten Festigkeitswerte liegen auf einem guten Niveau.

**Tab. 3:Ergebnisse der Zugversuche an laserdurchstrahlgeschweißten Platten**

| | | Zugfestigkeit in N/mm² | |
|---|---|---|---|
| | | Wanddicke | |
| Materialpaarung | | 2mm | 4mm |
| Material 1* | Material 2 | | |
| Bsp.3 | Vgl. 3 | 46,1 | 75,9 |
| Bsp. 4 | Vgl. 3 | 47,3 | 68,4 |
| Bsp. 3 | Vgl. 4 | 50,0 | 74,6 |
| Bsp. 4 | Vgl. 4 | 39,2 | 63,1 |
| Vgl.4 | Vgl. 3 | Nicht verschweißbar | Nicht verschweißbar |
| Vgl. 3 | Vgl. 3 | Nicht verschweißbar | Nicht verschweißbar |

| | | | |
|---|---|---|---|
| * Als Material 1 wird hier das Formteil/Material verstanden, das zuerst mit dem Laserstrahl in Kontakt kommt. | | | |

Die Beurteilung der Oberflächenqualität erfolgte durch Glanzmessung an mittig über Stangenanguss angespritzten Rechteckplatten (155x75x2 mm³). Zur besseren Differenzierung wurden die Platten unter unterschiedlichen Einspritzgeschwindigkeiten gefertigt, wobei erfahrungsgemäß die Oberflächenqualität, d.h. vor allem der Oberflächenglanz, von unverstärktem PA 6 und von glasfaserverstärktem PA6 bei sonst konstant gehaltenen Verarbeitungsbedingungen mit steigender Einspritzgeschwindigkeit zunimmt. Aus Tab.4 wird klar ersichtlich, dass mit den erfindungsgemäß eingefärbten Polyamidformmassen bei niedrigen Einspritzgeschwindigkeiten Platten mit höherem Oberflächenglanz resultieren als mit Formmassen, die mit herkömmlichen Farbmitteln (Ruß) eingefärbt sind.

**Tab. 4:Ergebnisse der Glanzmessung nach DIN 67530**

| | **Vgl.3** | **Vgl.4** | **Bsp.3** | **Bsp.4** |
|---|---|---|---|---|
| Einspritzgeschwindigkeit [mm/s] | | | | |
| 10 | 1 | 1 | 4 | 6 |
| 20 | 3 | 3 | 26 | 26 |
| 30 | 6 | 8 | 42 | 44 |
| **40** | 12 | 15 | 43 | 52 |
| 50 | 18 | 23 | 43 | 47 |
| 60 | 25 | 29 | 44 | 46 |
| 70 | 30 | 37 | 41 | 48 |

Die Beurteilung des dunklen Farbeindruckes erfolgte durch farbmetrische Charakterisierung der bei einer Einspritzgeschwindigkeit von 50 mm/s hergestellten Rechteckplatten mit einem Spektralphotometer Ultra Scan XL der Fa. Hunter. Die Reflexionsmessungen wurden bei polychromatischer Probenbeleuchtung mit der Meßgeometrie 0°/8° mit Glanz für die Normlichtart D65/10° nach DIN 5033 durchgeführt. Als dunkel werden Farben mit Normfarbwerten Y<30, bevorzugt <20, besonders bevorzugt <10 empfunden.

**Tabelle 5:Ergebnisse der farbmetrischen Charakterisierung**

| | **Vgl. 3** | **Vgl. 4** | **Bsp.3** | **Bsp. 4** |
|---|---|---|---|---|
| Normfarbwert Y | 4,89 | 4,91 | 4,59 | 4,57 |

## Patentansprüche

1. Verfahren zur Verbesserung der Oberflächenqualität von Formteilen aus thermoplastischen Formmassen mit einem schwarzen Farbeindruck deren Lasertransparenz im Bereich von nicht eingefärbtem Material liegt, **dadurch gekennzeichnet, dass** in den dafür einzusetzenden thermoplastischen Formmassen ein dunkler Farbeindruck (das heißt ein Normfarbwert von Y<30) durch Kombination von mindestens zwei Farbmitteln resultiert und dass im Bereich des sichtbaren Lichtes (400 nm bis 700 nm) bei einer Schichtdicke, die im Bereich von 0,4 bis 5 mm liegt, geringe oder keine Transmission (das heißt eine Transmission von ≤10%) und im Wellenlängenbereich von 700 nm bis 1200 nm zumindest in spektralen Teilbereichen eine Transmission von >10% bei Bestrahlen mit LASER-Licht auftritt, wobei die Farbmittelkombinationen ausgewählt sind aus den Farbstoffen vom Pyrazolon-, Perinon- und Anthrachinon-, Methin-, Azo-, und Cumarin-Typ und/oder metallhaltigen Pigmenten, wie anorganischen Pigmenten und Metallkomplexen von Azo-, Azomethin- oder Methinfarbstoffen, Azomethin-, Chinacridon-, Dioxazin-, Isoindolin-, Isoindolinon-, Perylen-, Phthalocyanin-, Pyrrolopyrrol- und Thioindigo-Farbmittel und Wismuth-Vanadat und wobei die Formmassen Polyamide oder thermoplastische Polyester enthalten und die Farbmittel so zu kombinieren sind, dass bei Verwendung in einer nichtstreuenden Matrix die Extinktion bei 1 mm Schichtdicke im VIS-Bereich E≥2 und im NIR-Bereich E≤2 beträgt.

2. Verfahren gemäß Anspruch 1, **dadurch gekennzeichnet, dass** die thermoplastischen Formmassen nur Polyamide enthalten.

3. Verfahren gemäß der Ansprüche 1 oder 2, **dadurch gekennzeichnet, dass** die thermoplastischen Formmassen 10-60 Gew.-% Glasfasern enthalten.

## Claims

1. A method of improving the surface quality of moulded parts from thermoplastic moulding compositions with a black colour perception whose laser transparency is in the range of non-coloured material, **characterized in that**, in the thermoplastic moulding compositions to be used therefor, a dark colour perception (i.e. a standard colour value of Y < 30) results through combination of at least two colorants, and **in that** in the visible light region (400 nm to 700 nm) at a layer thickness which is in the range from 0.4 to 5 mm low or nil transmission (i.e. a transmission of ≤ 10%) occurs and in the wavelength region from 700 nm to 1200 nm, at least in spectral partial regions, a transmission of > 10% occurs upon irradiation with LASER light, wherein the colorant combinations are selected from the dyes of the pyrazolone, perinone and anthraquinone, methine, azo and coumarin type and/or metal-containing pigments, such as inorganic pigments and metal complexes of azo, azomethine and methine dyes, azomethine, quinacridone, dioxazine, isoindoline, isoindolinone, perylene, phthalocyanine, pyrrolopyrrole and thioindigo colorants and bismuth vanadate and wherein the moulding compositions contain polyamides or thermoplastic polyesters and the colorants are to be combined such that when used in a non-scattering matrix the extinction at 1 mm layer thickness in the VIS region is E≥2 and in the NIR region is E≤2.

2. A method according to Claim 1, **characterized in that** the thermoplastic moulding compositions contain polyamides only.

3. A method according to the Claims 1 or 2, **characterized in that** the thermoplastic moulding compositions contain 10-60 wt.% of glass fibres.

## Revendications

1. Procédé pour améliorer la qualité de surface de pièces moulées obtenues à partir de masses de moulage thermoplastiques avec une perception de couleur noire, dont la transparence au rayonnement laser se situe dans la zone d'un matériau non coloré, **caractérisé en ce que**, dans les masses de moulage thermoplastiques utilisées à cette fin, on obtient une perception de couleur sombre (c'est-à-dire une valeur chromatique normalisée de Y < 30) en combinant au moins deux colorants et **en ce qu'**il se produise une faible transmission, voire aucune, (c'est-à-dire une transmission ≤ 10 %) dans la plage de la lumière visible (400 nm à 700 nm) pour une épaisseur de couche qui se situe dans la plage de 0,4 à 5 mm, et une transmission > 10 % dans la plage des longueurs d'ondes de 700 nm à 1200 nm, du moins dans des plages spectrales partielles, lors d'une exposition à une lumière de type LASER, dans lequel les combinaisons de colorants sont choisies parmi les colorants de type pyrazolone, périnone et anthraquinone, méthine, azoïque et coumarine et/ou des pigments contenant du métal, tels que des pigments inorganiques et des complexes métalliques de colorants de type azoïque, azométhine ou méthine, des colorants de type azométhine, quinacridone, dioxazine, isoindoline, isoindolinone, pérylène, phtalocyanine, pyrrolopyrrole et thioindigo et le vanadate de bismuth, et dans lequel les masses de moulage contiennent des polyamides ou des polyesters thermoplastiques et les colorants sont combinés de telle façon que l'absorbance, dans le cas d'une utilisation dans une matrice non dispersive et pour une épaisseur de couche de 1 mm, soit E ≥ 2 dans la plage du VIS et E ≤ 2 dans la plage des NIR.

2. Procédé selon la revendication 1, **caractérisé en ce que** les masses de moulage thermoplastiques ne contiennent que des polyamides.

3. Procédé selon la revendication 1 ou 2, **caractérisé en ce que** les masses de moulage thermoplastiques contiennent 10 à 60 % en poids de fibres de verre.
